# EUROPÄISCHE PATENTANMELDUNG

(11) **EP 3 009 719 A1**
(43) Veröffentlichungstag der Anmeldung: **20.04.2016**
(21) Anmeldenummer: 15002924.7
(22) Anmeldetag: 14.10.2015
(51) Int. Cl.: F16K 11/085, F16K 5/04, F01P 7/14

(54) **MEHRWEGEVENTIL ZUR STEUERUNG VON FLÜSSIGKREISEN**

(30) Priorität: 14.10.2014 DE 102014014964
(71) Anmelder: Henzel Formenbau GmbH, 63584 Gründau (DE)
(72) Erfinder: Henzel, Bernhard, 63584 Gründau (DE)
(74) Vertreter: Behrens, Helmut

(57) **Zusammenfassung**

Mehrwegeventil zur Steuerung von Flüssigkeitskreisen mit einem Ventilgehäuse (1) das mehrere Anschlussöffnungen (2) aufweist und einen Ventilkörper (3) enthält, der im Ventilgehäuse (1) mittels eines Drehantriebes (10) um eine Drehachse (4) drehbar gelagert ist und mindestens eine ihn durchdringende Durchflussöffnung (5) aufweist, wobei zur Abdichtung mindestens einer der Anschlussöffnungen (2) zwischen dieser und dem Ventilkörper (3) mindestens eine Dichtungsanordnung (8) vorgesehen ist. Die Erfindung ist dadurch gekennzeichnet, dass der Ventilkörper als Drehkolben (3) ausgebildet ist, der in einem zylindrischen Innenraum (6) des Ventilgehäuses (1) angeordnet ist und dass der Drehkolben (3) mindestens eine Durchflussöffnung (5) enthält, wobei an der äußeren Mantelfläche (7) des Drehkolbens (3) die Dichtungsanordnung (8) fixiert ist.

## Beschreibung

Die Erfindung betrifft ein Mehrwegeventil zur Steuerung von Flüssigkeitskreisen gemäß dem Oberbegriff des Patentanspruchs 1.

Es ist bekannt, das für die Steuerung von Flüssigkeiten in herkömmlichen Kühlsystemen von Verbrennungskraftmaschinen Mehrwegeventile eingesetzt werden, die häufig als Thermostatventile bezeichnet werden. Dabei wird in der Regel ein Wasser-Glykol-Gemisch als Kühlmittel mittels einer Wasserpumpe über den Motorblock und den Zylinderkopf der Verbrennungskraftmaschine durch einen Bypasskreis oder einen Kühlerkreis zugeführt. Zur Aufteilung der Ströme über den Bypasskreis oder den Kühlerkreis dienen derartige Mehrwegeventile, die meist von Temperaturaufnehmern im Kühlkreis gesteuert werden. Mit derartigen Mehrwegeventilen können aber auch andere thermisch belastete Flüssigkeitskeisläufe geregelt oder gesteuert werden.

Aus der DE 10 2006 038 213 B4 ist ein Thermostatventil für einen Kühlkreislauf einer Brennkraftmaschine bekannt. Dabei handelt es sich um ein Dreiwegeventil, das einen Maschinenanschluss, einen Kühleranschluss und einen Bypassanschluss aufweist. Der Maschinenanschluss ist dabei mit dem Kühlkreislauf der Brennkraftmaschine verbunden und wird von einer Kühlmittelpumpe mit einem Druck zum Umlauf des Kühlmittels beaufschlagt. Durch das.Thermostatventil wir das vom Motor heranströmende Kühlmittel nach Erreichen einer vorgegebenen Kühlmitteltemperatur über den Bypasskreis und/oder den Kühlerkreis wieder zum Maschinenkreis zum Motor der Brennkraftmaschine zurückgeleitet. Dabei weist das Thermostatventil ein innen hohles Ventilgehäuse auf, das aus einem Ober- und einem Unterteil.besteht, zwischen denen ein halbkugelförmiges hohles Ventilelement als Ventilkörper mit zwei Öffnungen drehbar gelagert ist, durch das die vom Maschinenanschluss mit Druck beaufschlagte Kühlflüssigkeit zwischen dem Bypasskreis und dem Kühlerkreis entsprechend einem Temperaturfühlerantrieb aufgeteilt wird. Dies erfolgt durch eine Verdrehung des Ventilelementes, das entsprechend seiner beiden Öffnungen die Ventilwege zum Kühler und/oder zum Bypass aufteilt oder verschließt. Dazu besitzt das Ventilelement zwei Endstellungen in denen entweder der Kühlerkreis oder der Bypasskreis geschlossen ist, wobei hingegen dazwischen die Kühlflüssigkeit entsprechend der Ventilstellung zwischen beiden Kreisen aufgeteilt wird. Da zumindest bei niedriger Motortemperatur die Kühlflüssigkeit nicht zusätzlich im Kühler abgekühlt wird, ist der Kühleranschluss durch eine Dichtungsanordnung besonders abgedichtet. Diese besteht aus einem gehäuseseitigen Dichtring und einem Gleitring, die koaxial zur Auslassöffnung des Kühleranschlusses im Oberteil des Ventilgehäuses befestigt sind. Dabei ist der Dichtring aus einem elastomeren Kunststoff und im Querschnitt etwa V-förmig ausgebildet und mit seiner Spitze zum Gleitring gerichtet. Zwischen dem Ventilelement und dem Dichtring ist dabei der Gleitring angebracht, der aus einem gleitfähigen Kunststoff aus PTFE (Markenname "Teflon") besteht. Durch die V-Form wird der Gleitring mit einer annähernd gleichbleibenden Federkraft auf das drehbar gelagerte Ventilelement gedrückt, um eine gute Dichtwirkung und eine leichtgängige Verdrehbarkeit zu erzielen. Durch die halbkugelige Form des Ventilelements und die daran angepasste Innenform des zweiteiligen Ventilgehäuses sind diese nur durch ein aufwendiges Herstellungsverfahren herstell- und montierbar, so dass dies als Serienteil in der Fahrzeugindustrie einen verhältnismäßig hohen Kostenaufwand erfordert.

Aus der DE 10 2012 205 596 A1 ist zwar auch ein Thermostatventil für eine Brennkraftmaschine bekannt, dessen kugelschalenförmiges Ventilelement nur eine einzige Öffnung aufweist und deshalb als einstückiges Kunststoffspritzgussteil deutlich einfacher herstellbar sein soll. Dabei besteht dieses Thermostatventil aus einem hohlen Ventilgehäuse mit einem Maschinenanschluss, einem Kühleranschluss und einem Bypassanschluss in dem das einstückige kugelförmige hohle Ventilelement mit zwei Endstellungen im Ventilgehäuse drehbar gelagert ist. Zur Abdichtung des Kühleranschlusses ist eine an die Kugelform des Ventilelements angepasste Dichtungsanordnung vorgesehen, die in einer Haltevorrichtung koaxial zur Öffnung des Kühleranschlusses am Ventilgehäuse angebracht ist. Diese Dichtungsanordnung besteht aus einem Gleitring aus gleitfähigem Kunststoff (Teflon) und einem elastomeren Dichtring, durch den der Gleitring gegenüber dem Ventilelement zur guten Abdichtung vorgespannt ist. Zur Verbesserung der Leichtgängigkeit bei der Drehung des Ventilelements sind am Ventilelement im Bereich der Öffnung Abflachungen vorgesehen, so dass beim Schließen das Ventilelement lediglich in seiner Endstellung am Gleitring anliegt, so dass ein reibungsarmes Verstellen oder Verdrehen möglich ist. Allerdings liegt bei geschlossenem Kühleranschluss durch den druckbeaufschlagten Maschinenanschluss ein hydrostatischer Druck auf der am Ventilgehäuse angebrachten Dichtungsanordnung, die der Vorspannung.entgegen wirkt und zu einer Undichtigkeit führen kann.

Aus der DE 100 14 555 A1 ist eine Steuervorrichtung für den Kühlkreislauf einer Brennkraftmaschine bekannt, die als Thermostatventil bzw. Mehrwegeventil ausgebildet ist. Diese besteht aus einem Ventilgehäuse mit einem zylinderförmigen Innenraum, in dem ein zylindrischer Drehschieber als Ventilelement drehbar gelagert ist. Dabei enthält der zylindrische Drehschieber in einer axialen Ebene drei Durchgangsbohrungen, die den Drehschieber durchdringen und durch die die Kühlflüssigkeit vom Maschinenanschluss auf den Bypass- und/oder Kühleranschluss aufteilbar oder verschließbar ist. Allerdings ist dieser Druckschrift kein Hinweis zur Abdichtung der Kühler- oder Bypassanschlüsse in ihren geschlossenen Endstellung zu entnehmen, so dass ein derartiges Thermostatventil nicht für abdichtbare Flüssigkeitskreisläufe einsetzbar ist.

Der Erfindung liegt deshalb die Aufgabe zugrunde, ein Mehrwegeventil oder ein Thermostatventil zu schaffen, das einfach herstellbar ist und eine sichere Abdichtung gegenüber mindestens eines Abflussanschlusses gewährleistet.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch das zylindrische Ventilgehäuseteil und dem darauf abgestimmten Drehkolben auf einfache Weise eine hohe Passgenauigkeit erreichbar ist, so dass deshalb die verschließbaren Anschlussöffnungen gut und leichtgängig abdichtbar sind. Dabei haben insbesondere die beiden gegeneinander abdichtbaren Zylinderflächen des Gehäuseinnenraums und des Drehkolbens den Vorteil, dass dazu wegen der hohen Oberflächengleichmäßigkeit nur eine verhältnismäßig geringe Vorspannung der Dichtungsanordnung notwendig ist, um eine gute Dichtwirkung zu erzielen. Dies hat gleichzeitig den Vorteil, dass die Dichtungsanordnung leicht vom Ventilsitz lösbar ist, so dass nur geringe Verstellkräfte zur Betätigung des Ventils zwischen seinen Endstellungen notwendig sind. Dadurch sind zur Betätigung vorteilhafterweise nahezu alle Drehantriebe möglich, auch wenn diese nur geringe Drehkräfte erzeugen, um unterschiedlichste Flüssigkeitskreise zu steuern oder zu regeln. So kann ein derartiges Mehrwegeventil wegen seiner Leichtgängigkeit und der geringen und der schnellen Umschaltzeit sowohl zur Auf-Zuschaltung, zur Zweipunktregelung, zur kontinuierlichen Steuerung oder Regelung als auch zur manuellen Steuerung oder Vermischung von einem oder mehreren Flüssigkeitskreisen vorteilhaft eingesetzt werden.

Die Erfindung hat weiterhin durch den Einsatz eines Drehkolbens in einem zylindrischen Gehäuse konstruktionsbedingt den Vorteil, dass derartige Ventile sehr kompakt auszuführen sind, da die Ventilhöhe nahezu nur vom Durchmesser der Anschlussöffnungen und der Ventildurchmesser nahezu nur von der Anzahl der Anschlussöffnungen abhängig ist. Deshalb sind bei allen vorgegebenen Durchflussmengen und Anschlusswegen verhältnismäßig kleine Baugrößen ausführbar.

Desweiteren hat die Erfindung durch die am Drehkolben angeordnete Dichtungsanordnung den Vorteil, dass dadurch hydrostatische Vordrücke zur Verbesserung der Dichtwirkung an den abfließenden Anschlussöffnungen nutzbar sind, was vorteilhafterweise gleichzeitig zur Verringerung des Dichtungsabriebs im Schaltbetrieb führt. Deshalb sind auch bei hohen Ventilschaltzahlen nur ein geringer Verschleiß an der Dichtungsanordnung erwartbar, was zu einer hohen Betriebsdauer führt.

Bei einer besonderen Ausbildung der Erfindung als 3/2-Wege-Thermostatventil hat den Vorteil, dass durch die drei Anschlussöffnungen in einer gemeinsamen axialen Ebene eine einfache Ausbildung des Ventilgehäuses erreichbar ist, so dass dieses serienmäßig als Kunststoffspritzgussteil herstellbar und kostengünstig für Verbrennungskraftmaschinen einsetzbar ist. Dabei hat insbesondere die Ausbildung des Drehkolbens mit einer gewölbten scheibenförmigen Aussparung mit einer ringförmigen Vertiefung für die Dichtungsanordnung den Vorteil, dass in dieser Vertiefung ein Vordruck von Seiten des einströmenden Maschinenkreises auf die Dichtungsanordnung aufgebaut wird, der die Dichtwirkung zu dem abdichtbaren Bypass- oder Kühlerkreis auf einfache Weise verbessert.

Weiterhin hat die besondere Ausbildung der Dichtungsanordnung aus einer dichtwulstbehafteten Dichtscheibe, einer Gleitschicht und einem Halteclip den Vorteil, dass diese einfach herstellbar und leicht am Drehkolben durch einfaches Aufstecken montierbar ist. Dabei hat insbesondere die Ausbildung der Gleitschicht aus einer gleitfähigen Kunststofffolie den Vorteil, dass darauf die elastomere Dichtscheibe aufgießbar ist, wobei die Gleitschicht nicht gesondert bearbeitet werden muss und gleichzeitig eine feste Verbindung beider Schichten erfolgt.

Bei einer weiteren besonderen Ausbildung der Dichtungsanordnung mit einem Dichtwulst und einem axial gegenüberliegenden am Drehkolben anliegenden Federwulst hat den Vorteil, dass durch den Federwulst aus einem elastomeren Material stets eine Federkraft als Vorspannung auf die Dichtwulst wirkt, so dass auch ohne einen Vordruck eine sichere Dichtwirkung erzielbar ist. Ein derartiges Mehrwegesystem ist deshalb auch außerhalb des Verbrennungskraftfahrzeugbereichs oder bei umkehrbaren Durchflussrichtungen mit umgekehrtem Vordruck einsetzbar.

Zusätzlich hat eine weitere besondere Ausbildung des Ventilgehäuses mit einer radialen Erhebung koaxial zu den abdichtbaren Anschlussöffnungen den Vorteil, dass dadurch der mechanische Anpressdruck auf die Dichtwulst erhöht wird, wodurch auch bei unterschiedlichen hydrodynamischen Drücken eine sichere Abdichtung gewährleistet wird.

Eine weitere besondere Ausbildung des Ventilgehäuses mit einer abgeschrägten Anschnittphase an den abdichtbaren Anschlussöffnungen hat den Vorteil, dass dadurch die Dichtwülste im Umschaltbetrieb weitgehend reibungsfrei über die abgeschrägten Anschlussöffnungen hinweggleiten, so das dazu nur geringe Drehkräfte notwendig sind und gleichzeitig der Verschleiß an.den Wulstflächen verringert wird.

Die Erfindung wird anhand eines Ausführungsbeispiels, das in der Zeichnung dargestellt ist, näher erläutert. Es zeigen:
- Fig. 1:: ein Schnittbild einer Vorderansicht eines 3/2-Wegeventils mit einer Unterdruckdose als Thermostatventil;
- Fig. 2:: ein Schnittbild einer Seitenansicht des 3/2-Wegeventils mit Unterdruckdose als Thermostatventil, und
- Fig. 3:: ein Schnittbild eines allgemeinen 3/2-Wegeventils.

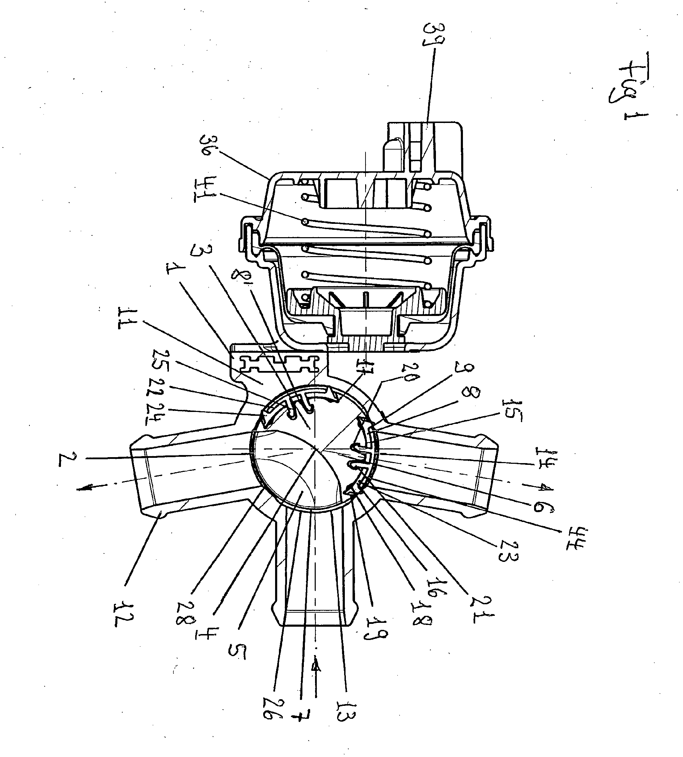

In Fig. 1 der Zeichnung ist ein Schnittbild einer Vorderansicht eines Mehrwegeventils mit einer Unterdruckdose 36 dargestellt, das als Thermostatventil für eine Verbrennungskraftmaschine ausgebildet ist, die ein Ventilgehäuse 1 mit einem zylinderförmigen Innenraum 6 aufweist, in dem ein kolbenartiger Ventilkörper 3 mit zwei Dichtungsanordnungen 8,8' drehbar gelagert angeordnet ist.

Das Mehrwegeventil ist als 3/2-Wegeventil mit drei Anschlussöffnungen 2,13,14 und zwei Endstellungen 9 ausgebildet und wird auch als Thermostatventil bezeichnet, das im Kühlreislauf einer Verbrennungskraftmaschine angeordnet ist, um die Temperatur der Kühlflüssigkeit zu steuern oder zu regeln. Dazu ist im Kühlkreis noch ein nicht.dargestellter Temperaturaufnehmer angeordnet, mit dessen Hilfe das Thermostatventil mittels einer Unterdruckdose 36 als Drehantrieb 10 gesteuert oder die Temperatur des Kühlkreises geregelt wird.

Das Ventilgehäuse 1 dieses Thermostatventils enthält koaxial zum zylindrischen hohlen Innenraum 6 ein topfartiges Gehäuseteil 31, an dessen äußerer radialer Mantelfläche drei Anschlussöffnungen 2,13,14 zum zylindrischen Innenraum 6 angeordnet sind. Das topfartige Gehäuseteil 31 besitzt dabei zum Einsatz für herkömmliche PKW-Motoren einen Durchmesser von ca. 30 bis 50 mm und eine axiale Länge von ca. 20 bis 50 mm. Die Anschlussöffnungen 2,13,14 liegen vorzugsweise in einer gemeinsamen axialen Ebene 11, die gleichzeitig die Schnittebene darstellt und etwa in der Hälfte der axialen Länge des Ventilgehäuses 1 liegt. Koaxial zu den Anschlussöffnungen 2,13,14 erstrecken sich radial nach außen drei Anschlussstutzen 12, die fest mit dem topfartigen Gehäuseteil 31 verbunden sind und an die die Anschlussschläuche für den Kühlkreis angebracht werden können. Dabei sind die Anschlussstutzen 12 senkrecht zur äußeren Mantelfläche des topfartigen Gehäuseteils 11 ausgerichtet und vorzugsweise in einem Winkel von ca. 80° zueinander angeordnet.

Zur Verteilung der Kühlflüssigkeit ist die erste Anschlussöffnung 2 mit seinem Anschlussstutzen 12 mit einem Kühlerkreis, die zweite Anschlussöffnung 13 mit einem Maschinenkreis und die dritte Anschlussöffnung 14 mit einem Bypasskreis verbunden. Dabei ist zur Verteilung der Kühlflüssigkeit zwischen dem Bypasskreis und dem Kühlerkreis im zylindrischen Innenraum 6 des Ventilgehäuses 1 ein kolbenartiger Ventilkörper 3 eingepasst, der als Drehkolben ausgebildet ist. Dieser Drehkolben 3 besitzt vorzugsweise einen Durchmesser vom ca. 30 mm und eine axiale Länge von ca. 25 mm. Zum Durchströmen der verteilbaren Kühlflüssigkeit enthält der Drehkolben 3 in der gemeinsamen axialen Ebene 11 zu den Anschlussöffnungen 2,13,14 eine Durchflusslöffnung 5, die in der gemeinsamen axialen Ebene 11 als radial abgewinkelter Durchlasskanal vorzugsweise mit einem Abknickwinkel von 80° ausgebildet ist. Dieser Durchlasskanal 5 hat vorzugsweise eine lichte Weite von ca. 15 mm, die der lichten Weite der Anschlussöffnungen 2,13,14 und der Anschlussstutzen 12 entspricht.

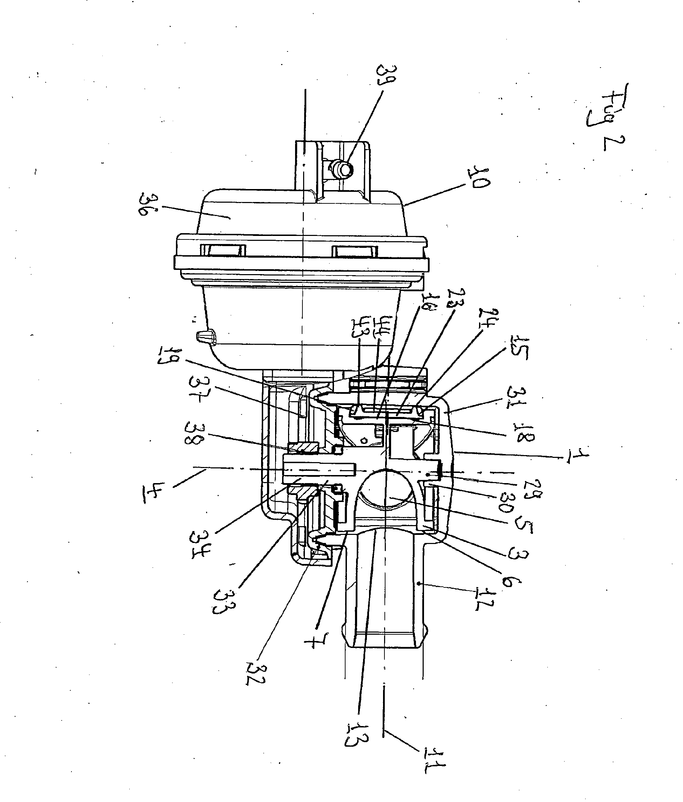

Die Anordnung des Drehkolbens 3 im Ventilgehäuse 1 ist im Einzelnen aus Fig. 2 der Zeichnung näher ersichtlich. So besitzt der Drehkolben 3 in seinem Zentrum eine Drehachse 4 zu der an jeder axialen Seite symmetrisch ein Lagerzapfen 29,33 vorgesehen ist. Dabei sind die Lagerzapfen 29,33 jeweils in einer am Ventilgehäuse 1 angeordneten Lagerbuchse 30 drehbar gelagert. An der äußeren Mantelfläche 7 des Drehkolbens 3 sind zwei gewölbte scheibenförmige Aussparungen 15 zur Einpassung der Dichtungsanordnung 8 eingelassen. Diese Aussparungen 15 bestehen aus einer kreisförmigen Vertiefung, die eine Tiefe von ca. 3 mm aufweist und an ihrem innenliegenden Ende eine Bodenfläche 16 vorgesehen ist, die parallel gewölbt zur äußeren Mantelfläche 7 verläuft. Zur besseren Einpassung der Ventilanordnungen 8,8' sind die gewölbten scheibenförmigen Aussparungen 15 nicht zylinderförmig, sondern verfügen an ihrem Außenrand über einen sich nach innen erweiternden Querschnitt, so dass die Außenwand 17 der Aussparungen 15 eine nach innen erweiternde schräge Außenwandfläche 19 aufweist. Im Bodenbereich des Außenrandes 17 der Aussparungen 15 ist zusätzlich noch eine ringförmige Vertiefung 18 angeordnet, durch die eine hydrostatische Vorspannung der Dichtungsanordnung 8 erzeugbar ist und deshalb mit dem Maschinenanschluss über hier nicht dargestellte in Bezug zur Bodenfläche 16 axiale Durchgangsbohrungen in Verbindung steht.

Zur Befestigung bzw. Fixierung der Dichtungsanordnungen 8,8' am Drehkolben 3 sind im Bereich des Zentrums der gewölbten scheibenförmigen Aussparungen 15 zwei parallele radiale Schlitze 20 eingelassen, die an ihren radialen Enden eine Hinterschneidung 21 aufweisen. Um die abdichtbare erste Anschlussöffnung 2 und die abdichtbare dritte Anschlussöffnung 14 vollständig verschließen zu können, sind die gewölbten scheibenförmigen Aussparungen 15 ebenfalls symmetrisch zur gemeinsamen axialen Ebene 11 angeordnet und gegeneinander auch um ca. 80° versetzt. Zur sicheren Abdeckung der beiden Anschlussöffnungen 2, 14 besitzen die beiden gewölbten scheibenförmigen Aussparungen 15 vorzugsweise einen Durchmesser von ca. 20 mm, die gleichzeitig dem Durchmesser der Dichtungsanordnungen 8,8' entsprechen.

Zur Abdichtung der ersten Anschlussöffnung 2 und der dritten Anschlussöffnung 14 werden in den beiden gewölbten scheibenförmigen Vertiefungen 15 jeweils eine Dichtungsanordnung 8,8' befestigt. Diese besteht aus jeweils einer scheibenförmigen Dichtscheibe 23 mit einer am Außenrand umlaufenden Dichtwulst 24, die aus einem elastomeren gut dichtenden Kunststoff oder Gummi vorzugsweise einem (Ethylen-Propylen-Dien-Kautschuk) EPDM-Kunststoff oder einem Gummimaterial besteht. Dabei besitzt die Dichtscheibe 23 an ihrem Wulstbereich zur sicheren Abdichtung vorzugsweise eine Höhe von 2,5 bis 4 mm und dazwischen im zentralen Bereich eine Dicke von ca. 1 bis 2 mm..Zur Verbesserung der Gleitfähigkeit ist die Dichtscheibe 23 an ihrer wulstigen Oberfläche zusätzlich mit einer dünnen PTFE-Folie (Polyterrafluorethylen - Markenname Teflon) verbunden, die als Gleitschicht 43 wirkt. Dazu wird die PTFE-Folie in eine Dichtscheibenform eingelegt und mit einem erhitzen elastomeren Kunststoff vorzugsweise einem EPDM-Kunststoff als Dichtscheibe 23 ausgegossen, wodurch zwischen den beiden Materialien eine feste Verbindung entsteht.

Zur Befestigung oder Fixierung der Dichtungsanordnung 8,8' am Drehkolben 3 wird die Dichtscheibe 23 auf ihrer zentralen Innenfläche radial zwischen der Dichtwulst 24 mit einem flachen Halteclip 22 abgedeckt, der in seinem zentralen Bereich zwei parallele axiale Haltestege 25 mit einem Wiederhaken aufweist, die axial die Dichtscheibe 23 durchdringen und in die Schlitze 20 des Drehkolbens 3 einrastbar sind. Dadurch wird die gewölbte Dichtscheibe 23 sicher in der scheibenförmigen Aussparung 15 fixiert.

Da derartige Thermostatventile besonders leichtgängig verdrehbar sein sollen, ist koaxial zu den beiden abdichtbaren Anschlussöffnungen 2,14 des Bypass- und Kühlerkreises eine ringförmige abgeschrägte Anschnittphase 28 angeordnet, durch die die Dichtwulst 24 über die Schräge der Anschnittphase 28 leichtgängig über den Randbereich der beiden abdichtbaren Anschlussöffnungen 2,14 gleitet. Dabei besitzt die Anschnittphase 28 zur inneren Mantelfläche 26 des zylindrischen Innenraums 6 vorzugsweise einen Anstiegswinkel von 5 bis 15°, um ein leichtes Auf- und Abgleiten über den Randbereich der beiden abdichtbaren Anschlussöffnungen 2, 14 zu erreichen.

Zur Montage des Thermostatventils wird der Drehkolben 3 zunächst in den zylindrischen Innenraum 6 des topartigen Gehäuseteils 31 eingesteckt, dessen Durchmesser formschlüssig aufeinander abgestimmt sind und nur so viel Spiel aufweisen, wie zur Abdichtung der Dichtungsanordnung 8,8' notwendig ist. Dieses Gehäuseteil 31 wird dann mit einem Deckel 32 fest verschlossen, wobei aus einer Lagerbuchse des Deckels 32 der zweite Lagerzapfen 33 axial herausragt. Dabei ist am Ende des zweiten Lagerzapfens 33 ein Vierkantteil 34 angeordnet, an dem ein Drehantrieb 10 formschlüssig aufgesteckt wird. Als Drehantrieb 10 ist die Unterdruckdose 36 an das topfartige Gehäuseteil 31 angeflanscht, aus der eine Antriebsstange 37 herausragt, die über ein Kniehebelgelenk 38 zur Umwandlung einer Linearbewegung in eine Drehbewegung mit dem Vierkantteil 34 des zweiten Lagerzapfens 33 verbunden ist.

Zum gesteuerten Antrieb ist die Unterdruckdose 36 mit einem zuschaltbaren Unterdruckanschluss über einen Druckanschlussstutzen 39 verbunden, durch den ein Kolben 40 in der Unterdruckdose 36 die Antriebstange 37 gegen die Kraft einer Feder 41 in Richtung der Unterdruckdose 36 verschiebt. Dadurch wird der Drehkolben 3 zwischen zwei Endstellungen 9 verdreht, wobei die dargestellte Endstellung 9 die 3. Anschlussöffnung 14 und die andere Endstellung die erste Anschlussöffnung 2 verschließt. Durch verschiedene Unterdruckwerte sind zwischen den beiden Endstellungen 9 auch beliebige Zwischenstellungen möglich, um den vom Motoranschluss einströmenden Kühlmittelstrom beliebig auf den Kühlerkreis und/oder den Bypasskreis aufzuteilen. Als Drehantrieb 10 kann aber auch ein temperaturgesteuerter elektrischer Schrittmotor oder ein Dehnstoffelement verwendet werden, um den Ventilkörper 3 im Ventilgehäuse 1 entsprechend dem gewünschten Durchfluss zu verdrehen.

Das vorstehend beschriebene Thermostatventil steuert den Kühlmittelfluss zwischen dem Bypasskreis und dem Kühlerkreis entsprechend der erfassten Kühlmitteltemperatur wie folgt:
Im dargestellten Schaltzustand ist die Kühlmitteltemperatur oberhalb der Betriebstemperatur, so dass der Kühlerkreis an der ersten Anschlussöffnung 2 vollständig geöffnet und der Bypasskreis an der dritten Anschlussöffnung 14 vollständig geschlossen ist. In diesem Betriebszustand ist der Drehantrieb 10 der Unterdruckdose 36 wie dargestellt, nicht betätigt, so dass der Federdruck der Unterdruckdose 36 die Antriebstange 37 mit maximaler Länge aus der Unterdruckdose 36 ausfährt und damit eine der beiden Endstellungen 9 erreicht ist. Dabei ist der Drehkolben 3 so weit verdreht, dass die eine Dichtungsanordnung 8 als erste Dichtungsanordnung vor die dritte Anschlussöffnung 14 zum Bypasskreis gedreht ist. Gleichzeitig ist dadurch die Durchflussöffnung 5 des Drehkolbens 3 vor die zweite Anschlussöffnung 13 zum Maschinenkreis und die erste Anschlussöffnung 2 zum Kühlerkreis gedreht und bilden zwischen diesen beiden Anschlussöffnungen 2 und 13 einen geöffneten Durchflusskanal 5.

Da der Maschinenkreis mit.dem Druck der Wasserpumpe beaufschlagt wird, fließt die Kühlflüssigkeit über den Motorblock zum Kühler und zurück und kühlt so den Motor auf eine vorgegebene Betriebstemperatur von ca. 80°C ab. In diesem Betriebszustand liegt die Dichtwulst 24 koaxial um die dritte Anschlussöffnung 14 an der inneren Zylinderwand 26 des Ventilgehäuses 1 an und dichtet diese gegenüber der Kühlflüssigkeit zum Anschlussstutzen 12 ab. Durch die Wasserpumpe im Maschinenkreis entsteht gleichzeitig in der ringförmigen Vertiefung 18 zwischen der Dichtscheibe 23 und dem Außenrand 17 der Bodenfläche 16 ein hydrostatischer Druck gegenüber der dritten Anschlussöffnung 14, so dass dadurch die Dichtwulst 24 der Dichtscheibe 23 zusätzlich gegen die innere Zylinderwand 26 gedrückt wird, wodurch sich die Abdichtwirkung zum Bypasskreis verbessert. Dadurch kann die Dichtwulst 24 sehr niedrig ausgebildet sein, so dass diese so eben ohne große Vorspannung an der Zylinderwand um die dritte Anschlussöffnung 14 anliegt, wodurch zusätzlich auch durch die vorhandene Gleitschicht 43 auf der Dichtscheibe 23 eine besonders leichtgängige Verdrehung des Ventilkörpers 3 ermöglicht wird. Ein derartiges Thermostatventil kann daher mit einem verhältnismäßig schwachen Drehantrieb 10 betätigt werden.

Ist hingegen die Flüssigkeit auf einen vorgegebenen Temperaturwert unterhalb der Betriebstemperatur abgekühlt, wird die Unterdruckdose 36 mit einem vorgegebenen Unterdruck am Unterdruckstutzen 39 beaufschlagt, dadurch bewegt sich der Unterdruckkolben 40 gegen die Federkraft nach innen, so dass die Antriebstange 37 über das Kniehebelgelenk 38 den Drehkolben 3 entgegen dem Uhrzeigersinn verdreht. Dabei hängt der Verdrehwinkel von dem beaufschlagten Unterdruck ab, kann aber auch sogleich in die zweite Endstellung um ca. 80° verdreht werden. Dadurch verlässt die erste Dichtungsanordnung 8 zunächst ihren geschlossenen Ventilsitz, wodurch die dritte Anschlussöffnung 14 zum Teil freigegeben wird. Hierdurch verringert sich gleichzeitig der hydrostatische Druck auf die Dichtwulst 24 der ersten Dichtungsanordnung 8, so dass diese vom Dichtsitz leicht abhebt und hierdurch die Reibung zwischen der ersten Dichtungsanordnung 8 und der Zylinderwand verringert wird. Hingegen wird die zweite Dichtungsanordnung 8'in der ersten Endstellung 9 leicht an der öffnungsfreien Zylinderinnenwand angelegt, wo kein hydrostatischer Druck wirksam werden kann, so das wegen der geringen Reibungskraft eine besonders leichtgängige Umschaltung möglich ist.

Bei einer weiteren Verdrehung gibt die erste Dichtungsanordnung 8 die dritte Anschlussöffnung 14 zum Bypasskreis frei und die zweite Dichtungsanordnung 8 tritt in den Öffnungsquerschnitt der ersten Anschlussöffnung 2 zum Kühlerkreis ein, so dass der Durchfluss der Kühlflüssigkeit zwischen dem Kühlerkreis und dem Bypasskreis entsprechend dem Drehwinkel aufgeteilt wird. Sobald der Drehkolben 3 die zweite Endstellung erreicht hat, wird die erste Anschlussöffnung 2 zum Kühlerkreis verschlossen und die dritte Anschlussöffnung 14 zum Bypasskreis vollständig geöffnet, so dass die Kühlflüssigkeit vollständig über den Bypasskreis strömt. Dabei wirkt dann wieder ein hydrostatischer Druck auf die Dichtwulst 24 der zweiten Dichtungsanordnung 8', so dass dadurch auch die erste Anschlussöffnung 2 vollständig abgedichtet wird. Mit einem derartigen 3/2-Wege-Thermostatventil kann deshalb die Kühlflüssigkeit mit einer Zweipunkt-Regelung oder im Mischbetrieb kontinuierlich gesteuert oder geregelt werden.

Ein derartiges Thermostatventil kann auch als 2/2-Wegeventil ausgebildet sein, mit dem vorzugsweise ein Heizungskreis in einem Kraftfahrzeug gesteuert wird. Ein derartiges Wegeventil unterscheidet sich lediglich von dem Wegeventil nach Fig. 1 und 2 der Zeichnung dadurch, dass dieses nur zwei Anschlussöffnungen aufweist, die vorzugsweise um 180° gegeneinander versetzt sind. Dabei ist der Zufluss des Wegeventils ebenfalls durch den Pumpendruck der Wasserpumpe belastet, so dass im geschlossenen Zustand auf der Abflussseite auch ein hydrostatischer Druck auf die Dichtscheibe.23 wirksam wird. Desweiteren besitzt der Drehkolben 3 als Durchflussöffnung 5 einen linearen röhrenförmigen Durchlasskanal der symmetrisch und quer zur Drehachse 4 verläuft. Ein derartiges 2/2-Wegeventil weist auch nur eine Dichtungsanordnung 8 auf, die 90° gegenüber dem Durchflusskanal 5 versetzt ist und den Durchfluss der nichtdruckbelasteten Anschlussöffnung zum Heizungskreis zwischen zwei Endstellungen steuert. Ansonsten kann dieses Wegeventil mittels einer Unterdruckdose 36, eines motorbetriebenen Aktors, eines Dehnstoffelements oder eines mechanischen Seilzug als Drehantrieb 10 geregelt oder gesteuert werden.

Ein derartiges Thermostatventil kann auch als 4/3-Wegeventil ausgebildet sein, wenn z.B. neben dem maschinenseitigen Zulauf jeweils ein Ablaufkreis zum Kühler, zum Bypass und zur Heizung vorgesehen ist. Dies würde sich gehäuseseitig von dem Wegeventil nach Fig. 1 oder 2 nur insoweit unterscheiden, dass eine zusätzliche Anschlussöffnung mit einem weiteren Anschlussstutzen 12 vorgesehen werden müsste. Dabei könnte die Zulauföffnung auch in einer anderen Gehäuseebene, nämlich parallel oder koaxial zur Drehachse 4 liegen, um die Anschlussöffnungen 2,13,14 mit drei Dichtungsanordnungen 8 an der äußeren Mantelfläche 7 des Drehkolbens 3 zu steuern.

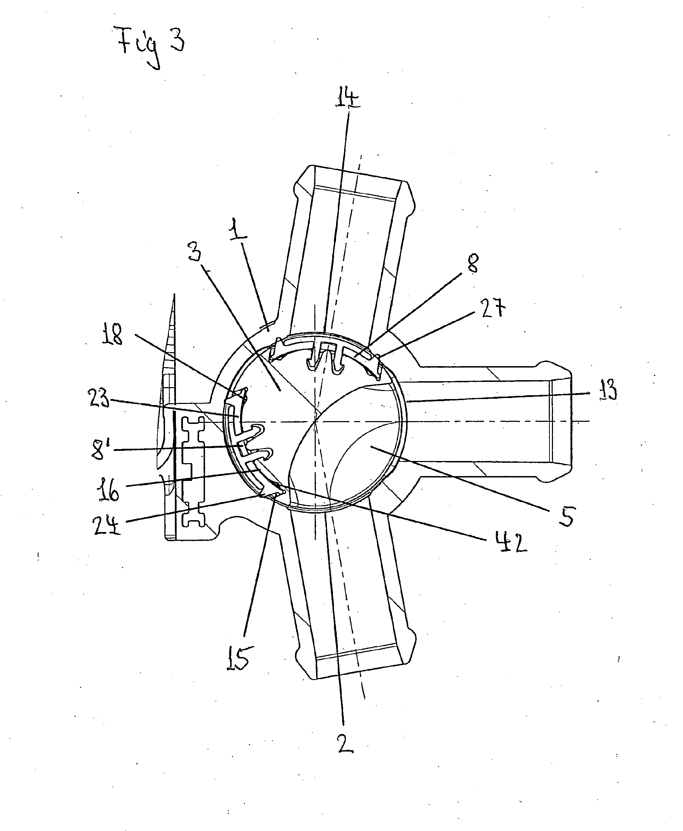

Eine alternative Ausführung eines Mehrwegeventils als 3/2-Wegeventil ist in Fig. 3 der Zeichnung dargestellt, das ohne hydrostatischen Vordruck sicher abdichtet. Dieses Mehrwegventil unterscheidet sich drehkolbenseitig von dem nach Fig. 1 und 2 der Zeichnung beschriebenen Thermostatventil dadurch, dass die Dichtscheibe 23 der Dichtungsanordnung 8 axial gegenüberliegend zur Dichtwulst 24 zusätzlich eine ringförmige Federwulst 42 aus einem Elastomerkunststoff aufweist, die auf der Bodenfläche 16 der scheibenförmigen Aussparung 15 aufliegt. Diese kann auch in der ringförmigen Vertiefung 18 oder auf einer flachen Bodenfläche 16 aufliegen, wobei diese Federwulst 42 höher sein muss als die ringförmige Vertiefung 18, um eine radiale Federkraft am Drehkolben aufbauen zu können.

Desweiteren ist im Gegensatz zum Gehäuseteil 31 nach Fig. 1 und 2 der Zeichnung jeweils noch eine radiale ringförmige Erhebung 27 koaxial zu den beiden abfließenden Anschlussöffnungen 2,14 vorgesehen. Diese ringförmige radiale Erhebung 27 ist auf die Höhe der Federwulst 42 abgestimmt und sollte vorzugsweise eine Höhe von 0,2 bis 0,5mm zur übrigen zylindrischen inneren Mantelfläche 26 aufweisen, um in einer geschlossenen Drehkolbenstellung die Dichtwulst 24 mit einer vorgegebenen Federspannung auf dessen Dichtsitz vorzuspannen. Dadurch wird eine sichere Abdichtung der Anschlussöffnungen 2 und 14 erreicht, auch wenn in dem Zulaufkreis kein nennenswerter Vordruck gegenüber dem Ablaufkreis herrscht, der eine hydrostatische Kraft auf die Dichtscheibe 23 ausüben könnte, oder wenn sich die Durchflussrichtungen in den Kreisen ändern. Derartige Mehrwegeventile benötigen zwar eine etwas höhere Betätigungskraft, verfügen aber über eine hohe Dichtigkeit, die weitgehend unabhängig vom hydrostatischen Vordruck ist.

Derartige Mehrwegeventile werden zwar vorzugsweise in Kühlkreisläufen von Verbrennungsmaschinen eingesetzt, können aber auch in anderen Flüssigkeitskreisen eingebaut werden. Dabei bestehen sowohl das Ventilgehäuse 1 als auch der Drehkolben 3 vorzugsweise aus einem formstabilen bis ca. 200°C temperaturfesten Kunststoff, die kostengünstig im Spritzgießverfahren hergestellt werden. Allerdings können derartige Ventile auch aus gießfähigen Metallen, wie z.B. Aluminium oder Messing bestehen. Hingegen wird die Dichtungsanordnung 8 vorzugsweise aus einem gut dichtenden elastomeren Kunststoffmaterial, vorzugsweise aus einem EPDM (Ethylen-Propylen-Dien-Kautschuk) oder Gummi gefertigt und enthält auf einer dem Gehäuse zugewandten Seite eine Gleitschicht aus einem gleitfähigen Kunststoffmaterial, vorzugsweise einem PTFE-Kunststoff (Markenname Teflon). Dabei wird die Dichtfolie in eine Gießform eingelegt, die die Kontur der Dichtscheibe als Negativform darstellt auf die das elastomere Dichtmaterial im erhitzen und flüssigen Zustand aufgespritzt wird. Dabei entsteht eine feste Verbindung zwischen der Gleitschicht und der Dichtungsschicht, deren äußerer Rand danach abgestanzt wird und die Dichtung an dem Drehkolben 3 mittels des Halteclips 22 durch Aufstecken montierbar ist.

## Patentansprüche

1. Mehrwegeventil zur Steuerung von Flüssigkeitskreisen mit einem Ventilgehäuse (1) das mehrere Anschlussöffnungen (2) aufweist und einen Ventilkörper (3) enthält, der im Ventilgehäuse (1) mittels eines Drehantriebes(10)um eine Drehachse (4) drehbar gelagert ist und mindestens eine ihn durchdringende Durchflussöffnung (5) aufweist, wobei zur Abdichtung mindestens einer der Anschlussöffnungen (2) zwischen dieser und dem Ventilkörper (3) mindestens eine Dichtungsanordnung (8) vorgesehen ist, **dadurch gekennzeichnet, dass** der Ventilkörper als Drehkolben (3) ausgebildet ist, der in einem zylindrischen Innenraum (6) des Ventilgehäuses (1) angeordnet ist und dass der Drehkolben (3) mindestens eine Durchflussöffnung (5) enthält, wobei an der äußeren Mantelfläche (7) des Drehkolbens (3) die Dichtungsanordnung (8) fixiert ist.

2. Mehrwegeventil nach Anspruch 1, **dadurch gekennzeichnet, dass** das Ventilgehäuse (1) zwei oder drei Anschlussöffnungen (2) enthält, die symmetrisch zu einer gemeinsamen axialen Ebene (11) quer zur Drehachse (4) angeordnet und jeweils durch einen Anschlussstutzen (12) nach außen geführt sind.

3. Mehrwegeventil nach Anspruch 1 oder 2, **dadurch gekennzeichnet, dass** dieses als 3/2-Wege-Thermostatventil für eine Verbrennungskraftmaschine mit drei Anschlussöffnungen ausgebildet ist, wobei die erste Anschlussöffnung (2) zu einem Kühlerkreis, die zweite Anschlussöffnung (13) zu einem Maschinenkreis und die dritte Anschlussöffnung (14) zu einem Bypasskreis führt und ihre Anschlussstutzen (12) mit diesen verbunden sind.

4. Mehrwegeventil nach Anspruch 3, **dadurch gekennzeichnet, dass** der Drehkolben 3 als Durchflussöffnung einen radial abgewinkelten Durchlasskanal (5) enthält, dessen Abknickwinkel dem Winkel zwischen der zweiten Anschlussöffnung (13) zum Maschinenkreis und der dritten Anschlussöffnung (14) zum Bypasskreis entspricht.

5. Mehrwegeventil nach Anspruch 1 bis 3, **dadurch gekennzeichnet, dass** der Drehkolben (3) in den zylindrischen Innenraum (6) des Ventilgehäuses (1) eingepasst ist und in der gemeinsamen axialen Ebene (11) mindestens eine gewölbte scheibenförmige Aussparung (15) für die Dichtungsanordnung (8) enthält.

6. Mehrwegeventil nach Anspruch 5, **dadurch gekennzeichnet, dass** die scheibenförmige Aussparung (15) im Drehkolben (3) eine kreisförmige Vertiefung aufweist, dessen Bodenfläche (16) parallel gewölbt zur äußeren Mantelfläche (7) des Drehkolbens (3) verläuft und eine Tiefe aufweist, die etwa der Höhe der Dichtungsanordnung (8) entspricht.

7. Mehrwegeventil nach Anspruch 6, **dadurch gekennzeichnet, dass** am Außenrand (17) der Bodenfläche (16) eine zusätzliche ringförmige Vertiefung (18) zum Aufbau einer hydrostatischen Vorspannung für die Dichtungsanordnung (8) angebracht ist.

8. Mehrwegeventil nach einem der Ansprüche 5 bis 7, **dadurch gekennzeichnet, dass** am Außenrand (17) der scheibenförmigen Aussparung (15) eine sich zur Bodenfläche (16) erweiternde schräge Außenwandfläche (19) vorgesehen ist und dass im zentralen Bereich der Bodenfläche (16) zwei parallele axiale Schlitze (20) mit radialer Hinterschneidung (21) belassen sind, in die ein Halteclip (22) der Dichtungsanordnung (8) einschnappbar ist.

9. Mehrwegeventil nach einem der Ansprüche 1 bis 8, **dadurch gekennzeichnet, dass** die Dichtungsanordnung (8) mindestens eine scheibenförmige Dichtscheibe (23) mit einer am Außenrand umlaufenden ringförmigen Dichtwulst (24) enthält, dessen axiale Erhebung größer ist als die Tiefe der scheibenförmigen Aussparung (15) und die aus einem elastomeren Kunststoff besteht, der außen mit einer gleitfähigen Kunststofffolie verbunden ist.

10. Mehrwegeventil nach Anspruch 9, **dadurch gekennzeichnet, dass** die Dichtungsanordnung (8) radial zwischen der Dichtwulst (24) einen Halteclip (22) enthält, der in seinem zentralen Bereich einen Teller (44) mit zwei parallelen Haltestegen (25) oder Haltestiften aufweist, die die Dichtscheibe (23) durchdringen und in die axialen Schlitze (20) des Drehkolbens (3) einclipbar sind.

11. Mehrwegeventil nach Anspruch 9 oder 10, **dadurch gekennzeichnet, dass** an der inneren Mantelfläche (26) des zylindrischen Innenraums (6) koaxial außen zu den Anschlussöffnungen (2,13,14) eine ringförmige radiale Erhebung (27) angeordnet ist, deren Höhe so bemessen ist, dass daran die Dichtwulst (24) der Dichtungsanordnung (8) in mindestens einer der Endstellungen (9) unter einer vorgesehenen Vorspannung dicht anliegt.

12. Mehrwegeventil nach einem der Ansprüche 9 bis 11, **dadurch gekennzeichnet, dass** an der inneren Mantelfläche (26) des zylindrischen Innenraums (6) koaxial zu den Anschlussöffnungen (2,13,14) eine ringförmige Anschnittphase (28) angeordnet ist, dessen Steigung so bemessen ist, dass die Dichtwulst (24) bei einer Verdrehung des Drehkolbens (3) leichtgängig auf den Randbereich der Anschlussöffnung (2, 13, 14) aufgleitet.
